# EUROPEAN PATENT SPECIFICATION

(11) **EP 3 179 790 B1**
(45) Date of publication and mention of the grant of the patent: **05.06.2019**
(21) Application number: 16200562.3
(22) Date of filing: 24.11.2016
(51) Int. Cl.: H04W 64/00, H04W 4/02, H04M 1/725, G08B 21/02, H04M 1/60, G08B 21/24

(54) **METHOD AND APPARATUS FOR DETERMINING LOCATION OF TARGET PORTABLE DEVICE**
VERFAHREN UND VORRICHTUNG ZUR BESTIMMUNG DES STANDORTES EINER MOBILEN ZIELVORRICHTUNG
PROCÉDÉ ET APPAREIL PORTATIF DE DÉTERMINATION DE L'EMPLACEMENT D'UNE CIBLE

(30) Priority: 11.12.2015 CN 201510919464
(43) Date of publication of application: 14.06.2017
(73) Proprietor: Xiaomi Inc., Beijing 100085 (CN)
(72) Inventor: HOU, Enxing, Haidian District, Beijing 100085 (CN); GAO, Ziguang, Haidian District, Beijing 100085 (CN); MENG, Deguo, Haidian District, Beijing 100085 (CN)
(74) Representative: Loustalan, Paul William

(56) References cited:
- WO-A1-2014/042507
- CN-A- 105 100 222
- US-A1- 2010 164 715

## Description

### TECHNICAL FIELD

The present disclosure generally relates to the field of computer technology, and more particularly, to a method and an apparatus for determining a location of a target portable device.

### BACKGROUND

With the development of electronic devices, application of electronic devices has become popular and diverse. For example, there are smart wrist bands, smart cards and smart key chains, etc. Such an electronic device is generally provided with a Bluetooth component, and through the Bluetooth component, the electronic device can communicate wirelessly with a mobile terminal (such as a mobile phone or a tablet computer and so on) which is bound with the electronic device, to achieve a function of prompting lost of an electronic device.

The electronic device of a user can send a wireless signal to the mobile terminal (such as a mobile phone). The mobile terminal can determine a distance from the electronic device according to strength of the wireless signal received. When the distance between the mobile terminal and the electronic device is larger than a preset distance threshold, the mobile terminal can prompt the user through a ringing bell or vibration.

In implementation of the present disclosure, it is found that the following problems exist in the related art.

The user often ignores such a prompt message from the mobile terminal. In this case, when the user later recognizes that the electronic device has been lost, the user has probably went too far away from the electronic device for the user to find it.

Patent applications WO2014/042507 and US2010/0164715 disclose methods for locating lost items.

### SUMMARY

In order to overcome the defects in the related art, the present disclosure provides a method and an apparatus for determining a location of a target portable device. The technical solutions are set forth as follows.

According to a first aspect of embodiments of the present disclosure, there is provided a method for determining a location of a target portable device, including:
receiving a location searching request corresponding to a target portable device, the location searching request carrying a device identification of the target portable device;
acquiring, according to the device identification of the target portable device, location information of the target portable device sent by another device upon said another device detecting a wireless signal of the target portable device; and
sending, according to the location information, a location indicating message regarding the target portable device to a communication terminal bound with the target portable device.
Optionally, the location information is positioning information of said another device acquired upon said another device detecting a wireless signal of the target portable device; and
sending, according to the location information, a location indicating message regarding the target portable device to a communication terminal bound with the target portable device includes:
   sending a location indicating message regarding the target portable device to a communication terminal bound with the target portable device, the location indicating message carrying the positioning information.

In this way, the user can learn about the positioning information of a device nearby the target portable device, and it is convenient for the user to find the target portable device.

The location information is a device identification of said another device; and
sending, according to the location information, a location indicating message regarding the target portable device to a communication terminal bound with the target portable device includes:
acquiring an account identification corresponding to the device identification of said another device, and sending a location indicating message regarding the target portable device to a communication terminal bound with the target portable device, the location indicating message carrying the account identification.

In this way, the user can, through the account identification, seek assistance from the user of the account corresponding to the account identification to acquire relevant information about the target portable device for the user to easily find the target portable device.

Acquiring an account identification corresponding to the device identification of said another device, and sending a location indicating message regarding the target portable device to a communication terminal bound with the target portable device, the location indicating message carrying the account identification, includes:
acquiring an account identification corresponding to the device identification of said another device, and sending an assistance request to a communication terminal which is currently logged in to an account corresponding to the account identification; and
if a confirmation message sent from the communication terminal bound with the account corresponding to the account identification is received, sending a location indicating message regarding the target portable device to the communication terminal bound with the target portable device, the location indicating message carrying the account identification.

In this way, the location indicating message carrying the account identification will be sent to the communication terminal bound with the target portable device after the user of the account corresponding to the account identification confirms it. Thus, it can improve the security of the account.

Optionally, acquiring location information of the target portable device sent by another device upon said another device detecting a wireless signal of the target portable device, includes:
acquiring location information of the target portable device and time information sent by said another device when said another device detected a wireless signal of the target portable device; and
sending, according to the location information, a location indicating message regarding the target portable device to a communication terminal bound with the target portable device, includes:
   sending, according to the location information and the time information, a location indicating message regarding the target portable device to a communication terminal bound with the target portable device.

In this way, the user can also acquire the time information corresponding to the location information, and it can improve the accuracy of the information.

Optionally, the method further includes:
receiving the location information of the target portable device and the time information sent by said another device when said another device detected a wireless signal of the target portable device; and
acquiring, according to the device identification of the target portable device, location information of the target portable device and time information sent by another device when said another device detected a wireless signal of the target portable device, includes:
   according to the device identification of the target portable device, acquiring a piece of location information which corresponds to a piece of time information closest to the current time from the received pieces of location information of the target portable device, and acquiring the piece of time information corresponding to the piece of location information; or
   according to the device identification of the target portable device, acquiring a piece of location information which corresponds to a piece of time information earlier than the current time by a time difference within a preset threshold, from the received pieces of location information of the target portable device, and acquiring the piece of time information corresponding to the piece of location information.

In this way, part of the location information and the time information which is more valuable can be acquired from the stored location information and time information. It can improve the efficiency of acquiring information for the user.

According to a second aspect of embodiments of the present disclosure, there is provided an apparatus for determining a location of a target portable device, including:
a first receiving module configured to receive a location searching request corresponding to a target portable device, the location searching request carrying a device identification of the target portable device;
an acquiring module configured to acquire, according to the device identification of the target portable device, location information of the target portable device sent by another device upon said another device detecting a wireless signal of the target portable device; and
a sending module configured to send, according to the location information, a location indicating message regarding the target portable device to a communication terminal bound with the target portable device.

Optionally, the location information is positioning information of said another device acquired upon said another device detecting a wireless signal of the target portable device; and
the sending module is configured to:
send a location indicating message regarding the target portable device to a communication terminal bound with the target portable device, the location indicating message carrying the positioning information.

The location information is a device identification of said another device; and
the sending module is configured to:
acquire an account identification corresponding to the device identification of said another device, and send a location indicating message regarding the target portable device to a communication terminal bound with the target portable device, the location indicating message carrying the account identification.

The sending module includes:
a first sending sub-module configured to acquire an account identification corresponding to the device identification of said another device, and send an assistance request to a communication terminal which is currently logged in to an account corresponding to the account identification; and
a second sending sub-module configured to, if it is received a confirmation message sent from the communication terminal bound with the account corresponding to the account identification, send a location indicating message regarding the target portable device to the communication terminal bound with the target portable device, the location indicating message carrying the account identification.

Optionally, the acquiring module is configured to:
acquire location information of the target portable device and time information sent by said another device when said another device detected a wireless signal of the target portable device; and
the sending module is configured to:
   send, according to the location information and the time information, a location indicating message regarding the target portable device to a communication terminal bound with the target portable device.

Optionally, the apparatus further includes:
a second receiving module configured to receive the location information of the target portable device and the time information sent by said another device when said another device detected a wireless signal of the target portable device; and
the acquiring module is configured to:
   according to the device identification of the target portable device, acquire a piece of location information which corresponds to a piece of time information closest to the current time from the received pieces of location information of the target portable device, and acquire the piece of time information corresponding to the piece of location information; or
   according to the device identification of the target portable device, acquire a piece of location information which corresponds to a piece of time information earlier than the current time by a time difference within a preset threshold, from the received pieces of location information of the target portable device, and acquire the piece of time information corresponding to the piece of location information.

According to a third aspect of embodiments of the present disclosure, there is provided an apparatus for determining a location of a target portable device, including:
a processor; and
a memory for storing instructions executable by the processor;
wherein the processor is configured to perform:
   receiving a location searching request corresponding to a target portable device, the location searching request carrying a device identification of the target portable device;
   acquiring, according to the device identification of the target portable device, location information of the target portable device sent by another device upon said another device detecting a wireless signal of the target portable device; and
   sending, according to the location information, a location indicating message regarding the target portable device to a communication terminal bound with the target portable device.

According to a fourth aspect of the embodiment of the present disclosure, there is provided a computer program which, when being executed on a processor of an apparatus, performs any one of the above methods.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

The technical solution according to embodiments of the present disclosure may have the following beneficial effects.

In the embodiments of the present disclosure, a location searching request corresponding to a target portable device is received, the location searching request carrying a device identification of the target portable device; location information of the target portable device sent by another device upon said another device detecting a wireless signal of the target portable device is acquired according to the device identification of the target portable device; and according to the location information, a location indicating message regarding the target portable device is sent to a communication terminal bound with the target portable device. In this way, when the user recognizes that he or she lost an electronic device, the location information about the electronic device can be provided for the user to find the electronic device.

It is to be understood that both the foregoing general description and the following detailed description are exemplary and explanatory only and are not restrictive of the present disclosure. The scope of the invention is defined by the appended claims.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for determining a location of a target portable device according to an exemplary embodiment;
Fig. 2 is a schematic diagram of a displayed interface according to an exemplary embodiment;
Fig. 3 is a schematic diagram of a displayed interface according to an exemplary embodiment;
Fig. 4 is a schematic diagram of a displayed interface according to an exemplary embodiment;
Fig. 5 is a flow chart illustrating a method for determining a location of a target portable device according to an exemplary embodiment;
Fig. 6 is a block diagram illustrating an apparatus for determining a location of a target portable device according to an exemplary embodiment;
Fig. 7 is a block diagram illustrating an apparatus for determining a location of a target portable device according to an exemplary embodiment;
Fig. 8 is a block diagram illustrating an apparatus for determining a location of a target portable device according to an exemplary embodiment; and
Fig. 9 is a block diagram illustrating a server according to an exemplary embodiment.

Through the above accompanying drawings, the specific embodiments of the present disclosure have been shown, for which a more detailed description will be given as below. These drawings and textual description are not intended to limit the scope of the concept of the present disclosure in any manner, but to explain the concept of the present disclosure to those skilled in the art through particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

An exemplary embodiments of the present disclosure provides a method for determining a location of a target portable device, which can be applied in a server, for example, a background server for an application program. A user can use various portable devices, such as a smart wrist band, a smart card and a smart key chain, and so on. Such a portable device can be provided with a wireless communication component, for example, a Bluetooth component. The user can bind these portable devices to a communication terminal such as a mobile phone, a tablet computer or other mobile terminals. The communication terminal can be installed with an application program for preventing losing a portable device. For example, a user registers an account and a password of the application program in the communication terminal and binds a portable device with the account in the application program. To this end, the application program can send a binding request to the server, and the server can establish corresponding relationship between the account and a device identification of the portable device. Alternatively, the user can also bind the portable device with a number of a mobile phone. In this way, the server can store binding relationship between a target portable device and a corresponding communication terminal. The server can include a memory, a processor and a transceiver. In an embodiment, the memory can be configured to store location information of a target portable device sent by another device when said another device detects a wireless signal of the target portable device, as well as data required or generated in a processing procedure described below. The processor can be configured to acquire location information of a target portable device sent by another device when said another device detects a wireless signal of the target portable device according to a device identification of the target portable device. The transceiver can be configured to receive a location searching request and send a location indicating message regarding a target portable device to a communication terminal bound with the target portable device. The server can include a power supply and other components.

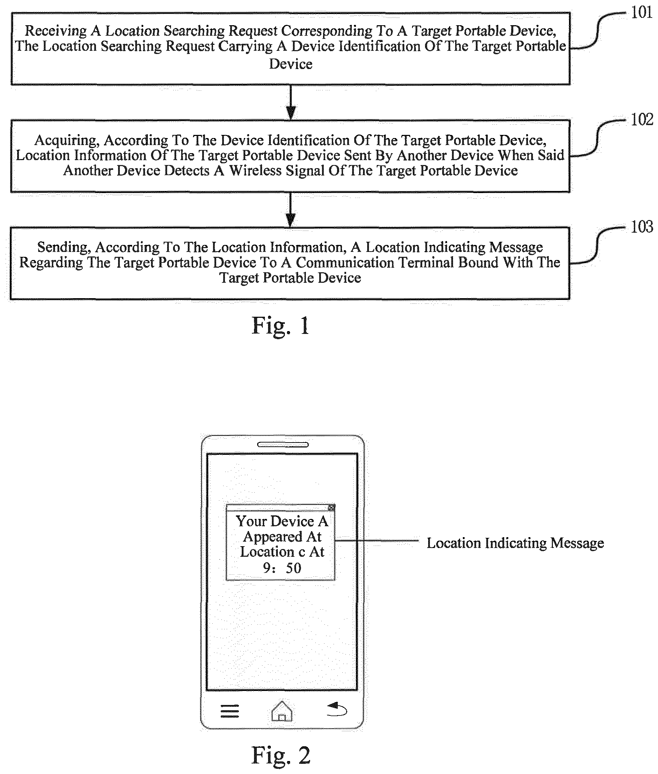

As shown in Fig. 1, the processing procedure of the method can include the following steps.

At step 101, a location searching request corresponding to a target portable device is received, the location searching request carrying a device identification of the target portable device.

In an embodiment, when a user finds that a portable device (i.e. the target portable device) is lost, the user can send through a communication terminal a location searching request corresponding to the target portable device to the server. The location searching request can carry the device identification of the target portable device. Then the server can firstly verify the identity of the user, for example, by requiring the user to enter the above mentioned account and a corresponding password, or by requiring the user to enter his or her phone number or other identity information. After the verification is passed, the communication terminal can send the location searching request corresponding to the target portable device to the server, and the server can receive the location searching request corresponding to the target portable device.

At step 102, location information of the target portable device sent by another device when said another device detects a wireless signal of the target portable device is acquired according to the device identification of the target portable device.

In an embodiment, the target portable device can periodically send broadcasting messages to surrounding devices through a wireless communication component. The broadcasting messages can carry the device identification of the target portable device. For example, the broadcasting messages can be messages sent through a Bluetooth component, and the device identification of the target portable device can be a Media Access Control (MAC) address. Each surrounding device (i.e. said another device) can receive the broadcasting message sent by the target portable device, and then can acquire location information of the surrounding device itself. If the surrounding device is equipped with a Global Positioning System (GPS) component, the location information can be positioning information acquired through the GPS component when the surrounding device detects the wireless signal of the target portable device. If the surrounding device is not equipped with a GPS component, the location information can be the device identification of the surrounding device. Each surrounding device can parse the broadcasting message received to acquire the device identification of the target device in the broadcasting message, and then send the device identification of the target portable device and the location information to the server.

The server can receive the device identification and corresponding location information sent by each of the one or more devices, and store the device identification and the location information received from each device as corresponding to each other to establish corresponding relationship between the device identification and the location information. Upon receipt of the location searching request corresponding to the target portable device, the server can parse the location searching request to acquire the device identification of the target portable device therein. Then, the server can acquire the location information corresponding to the device identification of the target portable device in the above mentioned corresponding relationship.

Alternatively, another device can send time information to the server. In this case, at step 102, location information of the target portable device and time information sent by another device when said another device detects a wireless signal of the target portable device are acquired.

In an embodiment, said another device can be equipped with a clock component. Upon receipt of a broadcasting message sent by the target portable device, said another device can acquire location information of itself and time information of the current time. Said another device can parse the broadcasting message received to acquire the device identification of the target portable device from the broadcasting message, and then can send the device identification of the target portable device, the location information and the time information to the server.

The server can receive the device identification and corresponding location information and corresponding timing information sent by each of the one or more devices, and store the device identification, the location information and the time information received from each device as corresponding to one another to establish corresponding relationship among the device identification, the location information and the time information. Upon receipt of the location searching request corresponding to the target portable device, the server can parse the location searching request to acquire the device identification of the target portable device therein. Then, the server can acquire the location information and the time information corresponding to the device identification of the target portable device in the above mentioned corresponding relationship.

For a device identification of a target portable device, the server can store pieces of location information and time information corresponding to the identification of the target portable device received in a relatively long time period. In order to improve the efficiency of acquiring information for the user, the server can acquire part of the pieces of location information and time information from the stored pieces of location information and time information. The corresponding procedure can be one of the following two manners.

In a first manner, according to the device identification of the target portable device, it is acquired a piece of location information which corresponds to a piece of time information closest to the current time from the received pieces of location information of the target portable device, and the piece of time information corresponding to the piece of location information.

In an embodiment, the server can determine the current time, and can determine a piece of time information which is closest to the current time from the stored corresponding relationship among the device identification, location information and time information. Then, a piece of location information corresponding to the piece of time information can be acquired. For example, the current time is 10:00, and the server stores that: at 8:00, the location information corresponding to the device identification is Location a; at 9:00, the location information corresponding to the device identification is Location b; and at 9:50, the location information corresponding to the device identification is Location c. In this case, the server can acquire the Location c and the corresponding time information 9:50.

In a second manner, according to the device identification of the target portable device, it is acquired a piece of location information which corresponds to a piece of time information earlier than the current time by a time difference within a preset threshold, from the received pieces of location information of the target portable device, and the piece of time information corresponding to the piece of location information.

In an embodiment, the server can determine the current time, and can determine a piece of time information which is closest to the current time from the stored corresponding relationship among the device identification, location information and time information. Then, a piece of location information corresponding to the piece of time information can be acquired. For example, the current time is 10:00, and the server stores that: at 8:00, the location information corresponding to the device identification is Location a; at 9:00, the location information corresponding to the device identification is Location b; and at 9:50, the location information corresponding to the device identification is Location c, and the preset threshold is 90 minutes. In this case, the server can acquire Location b and the corresponding time information 9:00, the Location c and the corresponding time information 9:50.

At step 103, according to the location information, a location indicating message regarding the target portable device is sent to a communication terminal bound with the target portable device.

In an embodiment, according to the stored binding relationship between the target portable device and the corresponding communication terminals, the server can determine a communication terminal (referred to as a first communication terminal) corresponding to the device identification of the target portable device. Upon acquiring the location information of the target portable device, the server can send a location indicating message regarding the target portable device to the first communication terminal according to the location information.

Alternatively, in the case mentioned above where another device sends time information to the server, correspondingly, at step 103, according to the time information and the location information, a location indicating message regarding the target portable device is sent to a communication terminal bound with the target portable device.

In an embodiment, upon acquiring the location information of the target portable device sent from another device, according to the stored binding relationship between the target portable device and the corresponding communication terminals, the server can determine a first communication terminal corresponding to the device identification of the target portable device. Then, the server can send a location indicating message which carries the positioning information and the time information to the first communication terminal. The first communication terminal can receive the location indicating message sent from the server and display the location indicating message. For example, the first communication terminal can display "Your device A appeared at Location c at 9: 50", as shown in Fig. 2.

Alternatively, in case where another device is equipped with a GPS component, the location information can be positioning information acquired by the GPS component when said another device detects the wireless signal of the target portable device. Correspondingly, at step 103, a location indicating message regarding the target portable device is sent to a communication terminal bound with the target portable device, the location indicating message carrying positioning information.

In an embodiment, upon acquiring the positioning information of the target portable device sent from said another device, the server can determine a first communication terminal corresponding to the device identification of the target portable device according to the stored binding relationship between the target portable device and the corresponding communication terminals, and then send a location indicating message carrying the positioning information to the first communication terminal. In addition, the location indicating message can also carry time information which corresponds to the positioning information. The first communication terminal can receive the location indicating message sent from the server and display the location indicating message. For example, the first communication terminal can display "Your device A appeared at Location c at 9:50".

Alternatively, in case where said another device is not equipped with a GPS component, the location information can be a device identification of said another device. Correspondingly, at step 103, an account identification corresponding to the device identification of said another device is acquired, and a location indicating message regarding the target portable device is sent to a communication terminal bound with the target portable device, the location indicating message carrying an account identification.

In an embodiment, upon acquiring the device identification of said another device, the server can determine the account identification corresponding to the device identification. The account identification can be an account identification of an account bound with said another device. The server can determine a first communication terminal corresponding to the device identification of the target portable device according to the stored binding relationship between the target portable device and the corresponding communication terminals. Then, the server can send a location indicating message to the first communication terminal, and the location indicating message can carry the account identification corresponding to the device identification of said another device and the device identification of said another device. The first communication terminal can receive the location indicating message sent from the server, and display the location indicating message. For example, the first communication terminal can display "Your device A appears around device B of Zhang San". After the user sees the location indicating message, the user can add the account corresponding to the account identification as a friend, such that the user can communicate with the user of the account, for example, by sending chat messages or through voice communication, and so on. In this way, the user can seek assistance from the user of the account to acquire relevant information about the target portable device for the user to easily find the target portable device.

Alternatively, the corresponding account identification is sent to the communication terminal bound with the target portable device after the user of said another device approves it. Correspondingly, at step 103, an account identification corresponding to a device identification of said another device is acquired, an assistance request is sent to a communication terminal currently logged in the account corresponding to the account identification; if it is received a confirmation message sent from the communication terminal bound with the account corresponding to the received account identification, a location indicating message regarding the target portable device is sent to a communication terminal bound with the target portable device, the location indicating message carrying the account identification.

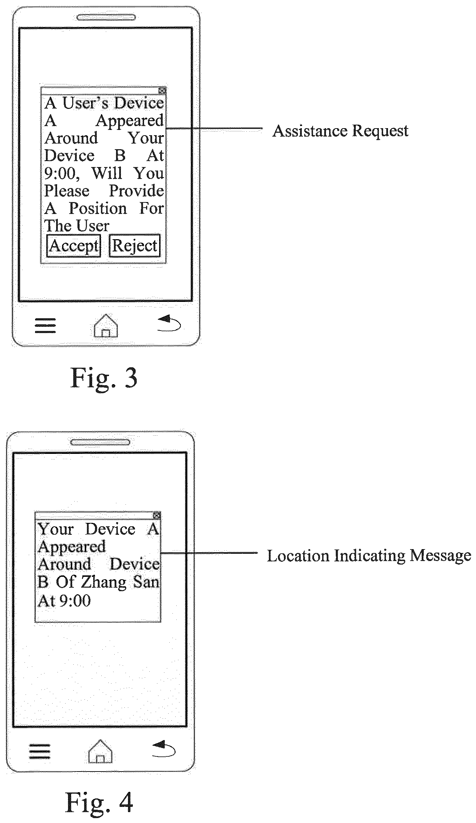

In an embodiment, upon acquiring the device identification of said another device, the server can determine the account identification corresponding to the device identification. The account identification can be an account identification of an account bound with said another device. The server can send an assistance request to a communication terminal (referred to as a second communication terminal) currently logged in the account, the assistance request carrying the device identification of the target portable device and the device identification of said another device. In addition, in case where said another device sends out time information, the assistance request can also carry time information. The second communication terminal can receive and display the assistance request sent from the server. For example, the second communication terminal can display "A User's Device A appeared around your device B at 9:00, will you please provide a position for the user", as shown in Fig. 3. The second communication terminal can also accept or reject the option. If a click instruction corresponding to the Accept option is received, a confirmation message can be sent to the server. After the server receives the confirmation message, the server can send a location indicating message to the first communication terminal, and the location indicating message can carry the device identification of said another device and the corresponding account identification and time information. The first communication terminal can receive the location indicating message sent from the server and display the location indicating message. For example, the first communication terminal can display "Your device A appeared around device B of Zhang San at 9:00", as shown in Fig. 4. After the user sees the location indicating message, the user can add the account corresponding to the account identification as a friend, such that the user can communicate with the user of the account, for example, by sending chat messages or through voice communication, and so on. In this way, the user can seek assistance from the user of the account to acquire relevant information about the target portable device for the user to easily find the target portable device.

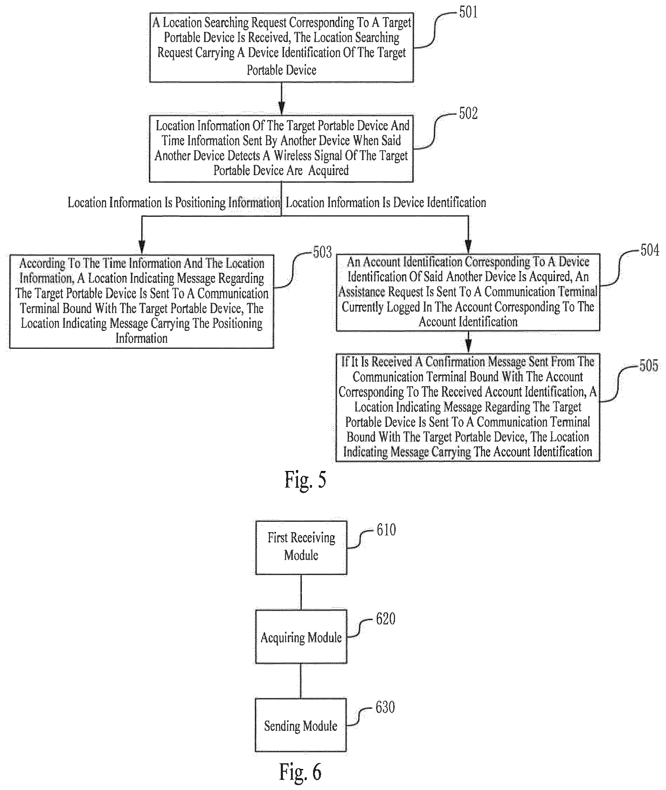

An embodiment of the present disclosure provides another method for determining a location of a target portable device. As shown in Fig. 5, the method can include the following steps.

At step 501, a location searching request corresponding to a target portable device is received, the location searching request carrying a device identification of the target portable device.

In an embodiment, when a user finds that a portable device (i.e. the target portable device) is lost, the user can send through a communication terminal a location searching request corresponding to the target portable device to the server. The location searching request can carry the device identification of the target portable device. The server can receive the location searching request. Then the server can firstly verify the identity of the user, for example, by requiring the user to enter the above mentioned account and a corresponding password, or by requiring the user to enter his or her phone number or other identity information. After the verification is passed, the communication terminal can send the location searching request corresponding to the target portable device to the server.

At step 502, location information of the target portable device and time information sent by another device when said another device detects a wireless signal of the target portable device are acquired.

In an embodiment, said another device can be equipped with a clock component. Upon receipt of a broadcasting message sent by the target portable device, said another device can acquire location information of itself and time information of the current time. If said another device is equipped with a GPS component, the location information can be positioning information acquired by the GPS component when said another device detects a wireless signal of the target portable device. If said another device is not equipped with a GPS component, the location information can be a device identification of said another device. Said another device can parse the broadcasting message received to acquire the device identification of the target portable device from the broadcasting message, and then can send the device identification of the target portable device, the location information and the time information to the server.

The server can receive the device identification and corresponding location information and corresponding timing information sent by each of the one or more devices, and store the device identification, the location information and the time information received from each device as corresponding to one another to establish corresponding relationship among the device identification, the location information and the time information. Upon receipt of the location searching request corresponding to the target portable device, the server can parse the location searching request to acquire the device identification of the target portable device therein. Then, the server can acquire the location information and the time information corresponding to the device identification of the target portable device in the above mentioned corresponding relationship. If the location information is positioning information, step 503 is performed; and if the location information is a device identification, step 504 is performed.

At step 503, according to the time information and the location information, a location indicating message regarding the target portable device is sent to a communication terminal bound with the target portable device, the location indicating message carrying the positioning information.

In an embodiment, upon acquiring the positioning information of the target portable device sent from said another device, the server can determine a first communication terminal corresponding to the device identification of the target portable device according to the stored binding relationship between the target portable device and the corresponding communication terminals, and then send a location indicating message to the first communication terminal. The location indicating message can also carry the positioning information and corresponding time information. The first communication terminal can receive the location indicating message sent from the server and display the location indicating message.

At step 504, an account identification corresponding to a device identification of said another device is acquired, an assistance request is sent to a communication terminal currently logged in the account corresponding to the account identification.

In an embodiment, upon acquiring the device identification of said another device, the server can determine the account identification corresponding to the device identification. The account identification can be an account identification of an account bound with said another device. The server can send an assistance request to a communication terminal (referred to as a second communication terminal) currently logged in the account, the assistance request carrying the device identification of the target portable device and the device identification of said another device. In addition, in case where said another device sends out time information, the assistance request can also carry time information.

At step 505, if it is received a confirmation message sent from the communication terminal bound with the account corresponding to the received account identification, a location indicating message regarding the target portable device is sent to a communication terminal bound with the target portable device, the location indicating message carrying the account identification.

In an embodiment, the second communication terminal can receive and display the assistance request sent from the server. After the second communication terminal receives a click instruction corresponding to the Accept option, a confirmation message can be sent to the server. After the server receives the confirmation message, the server can send a location indicating message to the first communication terminal, and the location indicating message can carry the device identification of said another device and the corresponding account identification. The first communication terminal can receive the location indicating message sent from the server and display the location indicating message.

In the embodiments of the present disclosure, a location searching request corresponding to a target portable device is received, the location searching request carrying a device identification of the target portable device; location information of the target portable device sent by another device when said another device detects a wireless signal of the target portable device is acquired according to the device identification of the target portable device; and according to the location information, a location indicating message regarding the target portable device is sent to a communication terminal bound with the target portable device. In this way, when the user recognizes that he or she lost an electronic device, the location information about the electronic device can be provided for the user to find the electronic device.

Another exemplary embodiment of the present disclosure also provides an apparatus for determining a location of a target portable device. As shown in Fig. 6, the apparatus includes: a first receiving module 610, an acquiring module 620 and a sending module 630.

The first receiving module 610 is configured to receive a location searching request corresponding to a target portable device, the location searching request carrying a device identification of the target portable device;
the acquiring module 620 is configured to acquire, according to the device identification of the target portable device, location information of the target portable device sent by another device when said another device detects a wireless signal of the target portable device; and
the sending module 630 is configured to send, according to the location information, a location indicating message regarding the target portable device to a communication terminal bound with the target portable device.

Optionally, the location information is positioning information of said another device acquired when said another device detects a wireless signal of the target portable device; and
the sending module 630 is configured to:
send a location indicating message regarding the target portable device to a communication terminal bound with the target portable device, the location indicating message carrying the positioning information.

Optionally, the location information is a device identification of said another device; and
the sending module 630 is configured to:
acquire an account identification corresponding to the device identification of said another device, and send a location indicating message regarding the target portable device to a communication terminal bound with the target portable device, the location indicating message carrying the account identification.

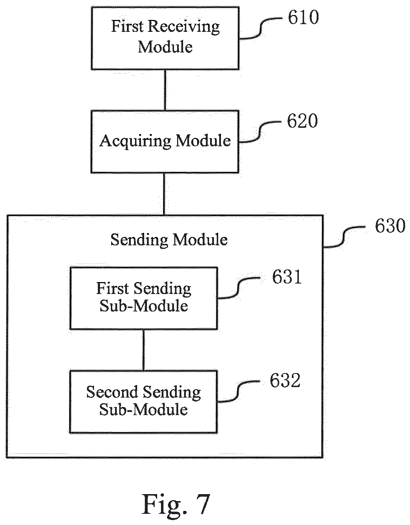

Optionally, as shown in Fig. 7, the sending module 630 includes:
a first sending sub-module 631 configured to acquire an account identification corresponding to the device identification of said another device, and send an assistance request to a communication terminal which is currently logged in to an account corresponding to the account identification; and
a second sending sub-module 632 configured to, if it is received a confirmation message sent from the communication terminal bound with the account corresponding to the account identification, send a location indicating message regarding the target portable device to the communication terminal bound with the target portable device, the location indicating message carrying the account identification.

Optionally, the acquiring module 620 is configured to:
acquire location information of the target portable device and time information sent by said another device when said another device detects a wireless signal of the target portable device; and
the sending module 630 is configured to:
   send, according to the location information and the time information, a location indicating message regarding the target portable device to a communication terminal bound with the target portable device.

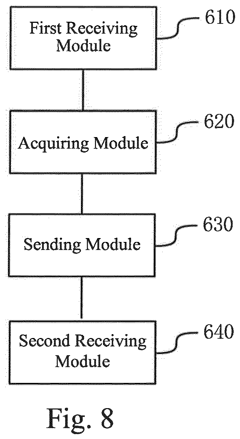

Optionally, as shown in Fig. 8, the apparatus further includes:
a second receiving module 640 configured to receive the location information of the target portable device and the time information sent by said another device when said another device detects a wireless signal of the target portable device; and
the acquiring module 620 is configured to:
   according to the device identification of the target portable device, acquire a piece of location information which corresponds to a piece of time information closest to the current time from the received pieces of location information of the target portable device, and acquire the piece of time information corresponding to the piece of location information; or
   according to the device identification of the target portable device, acquire a piece of location information which corresponds to a piece of time information earlier than the current time by a time difference within a preset threshold, from the received pieces of location information of the target portable device, and acquire the piece of time information corresponding to the piece of location information.

With respect to the devices in the above embodiments, the specific manners for performing operations for individual modules therein have been described in detail in the embodiments regarding the methods, which will not be elaborated herein.

In the embodiments of the present disclosure, a location searching request corresponding to a target portable device is received, the location searching request carrying a device identification of the target portable device; location information of the target portable device sent by another device when said another device detects a wireless signal of the target portable device is acquired according to the device identification of the target portable device; and according to the location information, a location indicating message regarding the target portable device is sent to a communication terminal bound with the target portable device. In this way, when the user recognizes that he or she lost an electronic device, the location information about the electronic device can be provided for the user to find the electronic device.

It should be noted that, the apparatus for determining a location of a target portable device according to the above embodiments is only illustrated as the functional modules in, for example, the above division manner. In practical application, the above functions may be assigned to different functional modules as desired, that is, the internal structure of the mobile terminal may be divided into different functional modules to accomplish all or a part of the functions described above. Besides, the above embodiments of an apparatus for determining a location of a target portable device and the embodiments of a method for determining a location of a target portable device belong to the same invention conceptive, and the specific operating procedure of the device may refer to the embodiments of the method. Therefore, the description thereof will not be repeated herein.

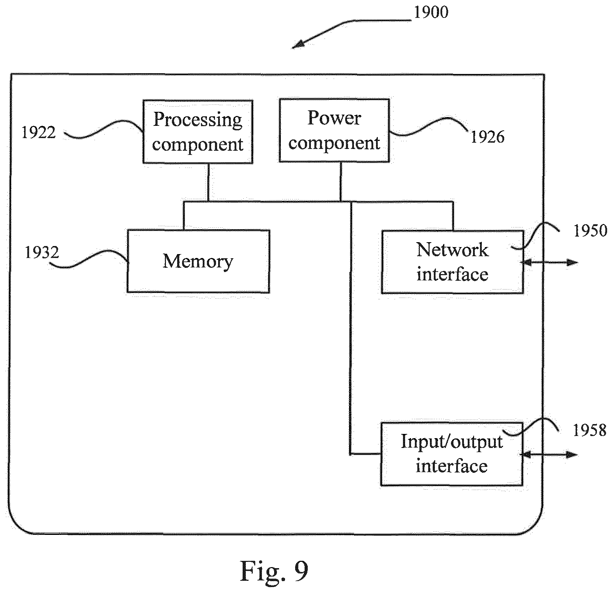

Another exemplary embodiment of the present disclosure provides a apparatus 1900 for determining a location of a target portable device, as shown in a box diagram. For example, the apparatus 1900 may be provided as a server. Referring to Fig. 9, the apparatus 1900 includes a processing component 1922 that further includes one or more processors, and memory resources represented by a memory 1932 for storing instructions executable by the processing component 1922, such as application programs. The application programs stored in the memory 1932 may include one or more modules each corresponding to a set of instructions. Further, the processing component 1922 is configured to execute the instructions to perform the above described method for controlling the device.

The apparatus 1900 may also include a power component 1926 configured to perform power management of the apparatus 1900, wired or wireless network interface(s) 1950 configured to connect the apparatus 1900 to a network, and an input/output (I/O) interface 1958. The apparatus 1900 may operate based on an operating system stored in the memory 1932, such as Windows Server™, Mac OS X™, Unix™, Linux™, FreeBSD™, or the like.

The apparatus 1900 may include a memory and one or more programs stored in the memory and configured to be executable by the one or more processors. The one or more programs include instructions to perform the following operation:
receiving a location searching request corresponding to a target portable device, the location searching request carrying a device identification of the target portable device;
acquiring, according to the device identification of the target portable device, location information of the target portable device sent by another device when said another device detects a wireless signal of the target portable device; and
sending, according to the location information, a location indicating message regarding the target portable device to a communication terminal bound with the target portable device.

Optionally, the location information is positioning information of said another device acquired when said another device detects a wireless signal of the target portable device; and
sending, according to the location information, a location indicating message regarding the target portable device to a communication terminal bound with the target portable device includes:
sending a location indicating message regarding the target portable device to a communication terminal bound with the target portable device, the location indicating message carrying the positioning information.
Optionally, the location information is a device identification of said another device; and
sending, according to the location information, a location indicating message regarding the target portable device to a communication terminal bound with the target portable device includes:
acquiring an account identification corresponding to the device identification of said another device, and sending a location indicating message regarding the target portable device to a communication terminal bound with the target portable device, the location indicating message carrying the account identification.

Optionally, acquiring an account identification corresponding to the device identification of said another device, and sending a location indicating message regarding the target portable device to a communication terminal bound with the target portable device, the location indicating message carrying the account identification, includes:
acquiring an account identification corresponding to the device identification of said another device, and sending an assistance request to a communication terminal which is currently logged in to an account corresponding to the account identification; and
if it is received a confirmation message sent from the communication terminal bound with the account corresponding to the account identification, sending a location indicating message regarding the target portable device to the communication terminal bound with the target portable device, the location indicating message carrying the account identification.

Optionally, acquiring location information of the target portable device sent by another device when said another device detects a wireless signal of the target portable device, includes:
acquiring location information of the target portable device and time information sent by said another device when said another device detects a wireless signal of the target portable device; and
sending, according to the location information, a location indicating message regarding the target portable device to a communication terminal bound with the target portable device, includes:
   sending, according to the location information and the time information, a location indicating message regarding the target portable device to a communication terminal bound with the target portable device.

Optionally, the method further includes:
receiving the location information of the target portable device and the time information sent by said another device when said another device detects a wireless signal of the target portable device; and
acquiring, according to the device identification of the target portable device, location information of the target portable device and time information sent by another device when said another device detects a wireless signal of the target portable device, includes:
   according to the device identification of the target portable device, acquiring a piece of location information which corresponds to a piece of time information closest to the current time from the received pieces of location information of the target portable device, and acquiring the piece of time information corresponding to the piece of location information; or
   according to the device identification of the target portable device, acquiring a piece of location information which corresponds to a piece of time information earlier than the current time by a time difference within a preset threshold, from the received pieces of location information of the target portable device, and acquiring the piece of time information corresponding to the piece of location information.

In the embodiments of the present disclosure, a location searching request corresponding to a target portable device is received, the location searching request carrying a device identification of the target portable device; location information of the target portable device sent by another device when said another device detects a wireless signal of the target portable device is acquired according to the device identification of the target portable device; and according to the location information, a location indicating message regarding the target portable device is sent to a communication terminal bound with the target portable device. In this way, when the user recognizes that he or she lost an electronic device, the location information about the electronic device can be provided for the user to find the electronic device.

## Claims

1. A method for determining a location of a target portable device comprising:
receiving (101) a location searching request corresponding to a target portable device, the location searching request carrying a device identification of the target portable device;
acquiring (102), according to the device identification of the target portable device, location information of the target portable device sent by another device upon said another device detecting a wireless signal of the target portable device; and
sending (103), according to the location information, a location indicating message regarding the target portable device to a communication terminal bound with the target portable device, **characterised in that**:
the location information is a device identification of said another device; and
sending (103), according to the location information, a location indicating message regarding the target portable device to a communication terminal bound with the target portable device comprises:
acquiring an account identification corresponding to the device identification of said another device, and sending an assistance request to a communication terminal which is currently logged in to an account corresponding to the account identification; and
if a confirmation message sent from the communication terminal bound with the account corresponding to the account identification is received, sending a location indicating message regarding the target portable device to the communication terminal bound with the target portable device, the location indicating message carrying the account identification.

2. The method of claim 1, wherein
the location information is positioning information of said another device acquired when said another device detects a wireless signal of the target portable device; and sending (103), according to the location information, a location indicating message regarding the target portable device to a communication terminal bound with the target portable device comprises:
sending a location indicating message regarding the target portable device to a communication terminal bound with the target portable device, the location indicating message carrying the positioning information.

3. The method of claim 1 or 2, wherein acquiring (102) location information of the target portable device sent by another device when said another device detects a wireless signal of the target portable device, comprises:
acquiring location information of the target portable device and time information sent by said another device upon said another device detecting a
wireless signal of the target portable device; and
sending (103), according to the location information, a location indicating message regarding the target portable device to a communication terminal bound with the target portable device, comprises:
sending, according to the location information and the time information, a location indicating message regarding the target portable device to a communication terminal bound with the target portable device.

4. The method of claim 3, wherein the method further comprises:
receiving the location information of the target portable device and the time information sent by said another device when said another device detected a wireless signal of the target portable device; and
acquiring, according to the device identification of the target portable device, location information of the target portable device and time information sent by said another device when said another device detected a wireless signal of the target portable device, comprises:
according to the device identification of the target portable device, acquiring a piece of location information which corresponds to a piece of time information closest to the current time from the received pieces of location information of the target portable device, and acquiring the piece of time information corresponding to the piece of location information; or
according to the device identification of the target portable device, acquiring a piece of location information which corresponds to a piece of time information earlier than the current time by a time difference within a preset threshold, from the received pieces of location information of the target portable device, and acquiring the piece of time information corresponding to the piece of location information.

5. An apparatus for determining a location of a target portable device comprising:
a first receiving module (610) configured to receive a location searching request corresponding to a target portable device, the location searching request carrying a device identification of the target portable device;
an acquiring module (620) configured to acquire, according to the device identification of the target portable device, location information of the target portable device sent by another device upon said another device detecting a wireless signal of the target portable device; and
a sending module (630) configured to send, according to the location information, a location indicating message regarding the target portable device to a communication terminal bound with the target portable device, **characterized in that**:
the location information is a device identification of said another device; and
the sending module (630) comprises:
a first sending sub-module (631) configured to acquire an account identification corresponding to the device identification of said another device, and send an assistance request to a communication terminal which is currently logged in to an account corresponding to the account identification; and
a second sending sub-module (632) configured to, if a confirmation message sent from the communication terminal bound with the account corresponding to the account identification is received, send a location indicating message regarding the target portable device to the communication terminal bound with the target portable device, the location indicating message carrying the account identification.

6. The apparatus of claim 5, wherein
the location information is positioning information of said another device acquired upon said another device detecting a wireless signal of the target portable device; and
the sending module (630) is configured to:
send a location indicating message regarding the target portable device to a communication terminal bound with the target portable device, the location indicating message carrying the positioning information.

7. The apparatus of any of claims 5 or 6, wherein the acquiring module (620) is configured to:
acquire location information of the target portable device and time information sent by said another device upon said another device detecting a wireless signal of the target portable device; and
the sending module (630) is configured to:
send, according to the location information and the time information, a location indicating message regarding the target portable device to a communication terminal bound with the target portable device.

8. The apparatus of claim 7, wherein the apparatus further comprises:
a second receiving module (640) configured to receive the location information of the target portable device and the time information sent by said another device when said another device detected a wireless signal of the target portable device; and
the acquiring module (620) is configured to:
according to the device identification of the target portable device, acquire a piece of location information which corresponds to a piece of time information closest to the current time from the received pieces of location information of the target portable device, and acquire the piece of time information corresponding to the piece of location information; or
according to the device identification of the target portable device, acquire a piece of location information which corresponds to a piece of time information earlier than the current time by a time difference within a preset threshold, from the received pieces of location information of the target portable device, and acquire the piece of time information corresponding to the piece of location information.

9. A computer program which, when being executed on a processor (1922) of an apparatus (1900), performs the method of any of claims 1-4.

## Patentansprüche

1. Verfahren zum Bestimmen eines Standorts eines portablen Zielgeräts, das Folgendes beinhaltet:
Empfangen (101) einer Standortsuchanforderung entsprechend einem portablen Zielgerät, wobei die Standortsuchanforderung eine Geräteidentifikation des portablen Zielgeräts trägt;
Erfassen (102), gemäß der Geräteidentifikation des portablen Zielgeräts, von Standortinformationen des portablen Zielgeräts, gesendet von einem anderen Gerät, nachdem das genannte andere Gerät ein Funksignal des portablen Zielgeräts erkannt hat; und
Senden (103), gemäß den Standortinformationen, einer Standortanzeigenachricht in Bezug auf das portable Zielgerät zu einem Kommunikationsendgerät, das mit dem portablen Zielgerät gekoppelt ist, **dadurch gekennzeichnet, dass**:
die Standortinformation eine Geräteidentifikation des genannten anderen Geräts ist; und
Senden (103), gemäß der Standortinformation, einer Standortanzeigenachricht in Bezug auf das portable Zielgerät zu einem mit dem portablen Zielgerät gekoppelten Kommunikationsendgerät, das Folgendes beinhaltet:
Erfassen einer Kontoidentifikation entsprechend der Geräteidentifikation des genannten anderen Geräts und Senden einer Assistenzanforderung zu einem Kommunikationsendgerät, das derzeit in ein Konto entsprechend der Kontoidentifikation eingeloggt ist; und
Senden, wenn eine Bestätigungsnachricht empfangen wird, die von dem Kommunikationsendgerät gesendet wird, das mit dem Konto entsprechend der Kontoidentifikation gekoppelt ist, einer Standortanzeigenachricht in Bezug auf das portable Zielgerät zu dem mit dem portablen Zielgerät gekoppelten Kommunikationsendgerät, wobei die Standortanzeigenachricht die Kontoidentifikation führt.

2. Verfahren nach Anspruch 1, wobei
die Standortinformation eine Positionierungsinformation des anderen Geräts ist, die erfasst wird, wenn das genannte andere Gerät ein Funksignal des portablen Zielgeräts erkennt; und
Senden (103), gemäß der Standortinformation, einer Standortanzeigenachricht in Bezug auf das portable Zielgerät zu einem mit dem portablen Zielgerät gekoppelten Kommunikationsendgerät, das Folgendes beinhaltet:
Senden einer Standortanzeigenachricht in Bezug auf das portable Zielgerät zu einem mit dem portablen Zielgerät gekoppelten Kommunikationsendgerät, wobei die Standortanzeigenachricht die Positionierungsinformation führt.

3. Verfahren nach Anspruch 1 oder 2, wobei das Erfassen (102) von Standortinformationen des von einem anderen Gerät gesendeten tragbaren Zielgeräts, wenn das genannte andere Gerät ein Funksignal des portablen Zielgeräts erkennt, Folgendes beinhaltet:
Erfassen von Standortinformationen des portablen Zielgeräts und von Zeitinformationen, die von dem genannten anderen Gerät gesendet werden, wenn das genannte andere Gerät ein Funksignal des portablen Zielgeräts erkennt; und
Senden (103), gemäß den Standortinformationen, einer Standortanzeigenachricht in Bezug auf das portable Zielgerät zu einem mit dem portablen Zielgerät gekoppelten Kommunikationsendgerät, das Folgendes beinhaltet:
Senden, gemäß der Standortinformation und der Zeitinformation, einer Standortanzeigenachricht in Bezug auf das portable Zielgerät zu einem mit dem portablen Zielgerät gekoppelten Kommunikationsendgerät.

4. Verfahren nach Anspruch 3, wobei das Verfahren ferner Folgendes beinhaltet:
Empfangen der Standortinformation des portablen Zielgeräts und der Zeitinformation, die von dem genannten anderen Gerät gesendet wird, wenn das genannte andere Gerät ein Funksignal des portablen Zielgeräts erkannt hat; und
Erfassen, gemäß der Geräteidentifikation des portablen Zielgeräts, von Standortinformationen des portablen Zielgeräts und von Zeitinformationen, die von dem genannten anderen Gerät gesendet werden, wenn das genannte andere Gerät ein Funksignal des portablen Zielgeräts erkannt hat, das Folgendes beinhaltet:
Erfassen, gemäß der Geräteidentifikation des portablen Zielgeräts, einer Standortinformation, die einer Zeitinformation entspricht, die der aktuellen Zeit am nächsten liegt, von den empfangenen Standortinformationen des portablen Zielgeräts, und Erfassen der Zeitinformation, die der Standortinformation entspricht; oder
Erfassen, gemäß der Geräteidentifikation des portablen Zielgeräts, einer Standortinformation, die einer Zeitinformation entspricht, die um eine Zeitdifferenz innerhalb einer voreingestellten Schwelle früher ist als die aktuelle Zeit, von den empfangenen Standortinformationen des portablen Zielgeräts, und Erfassen der Zeitinformation entsprechend der Standortinformation.

5. Vorrichtung zum Bestimmen eines Standorts eines portablen Zielgeräts, die Folgendes umfasst:
ein erstes Empfangsmodul (610), konfiguriert zum Empfangen einer Standortsuchanforderung entsprechend einem portablen Zielgerät, wobei die Standortsuchanforderung eine Geräteidentifikation des portablen Zielgeräts führt;
ein Erfassungsmodul (620), konfiguriert zum Erfassen, gemäß der Geräteidentifikation des portablen Zielgeräts, von Standortinformationen des portablen Zielgeräts, gesendet von einem anderen Gerät, wenn das genannte andere Gerät ein Funksignal des portablen Zielgeräts erkennt; und
ein Sendemodul (630), konfiguriert zum Senden, gemäß den Standortinformationen, einer Standortanzeigenachricht in Bezug auf das portable Zielgerät zu einem mit dem portablen Zielgerät gekoppelten Kommunikationsendgerät, **dadurch gekennzeichnet, dass**:
die Standortinformation eine Geräteidentifikation des genannten anderen Geräts ist; und
das Sendemodul (630) Folgendes umfasst:
ein erstes Sendesubmodul (631), konfiguriert zum Erfassen einer Kontoidentifikation entsprechend der Geräteidentifikation des genannten anderen Geräts und zum Senden einer Assistenzanforderung zu einem Kommunikationsendgerät, das derzeit in ein Konto entsprechend der Kontoidentifikation eingeloggt ist; und
ein zweites Sendesubmodul (632), konfiguriert zum Senden, wenn eine Bestätigungsnachricht empfangen wird, die von dem Kommunikationsendgerät gesendet wird, das mit dem Konto entsprechend der Kontoidentifikation gekoppelt ist, einer Standortanzeigenachricht in Bezug auf das portable Zielgerät zu dem mit dem portablen Zielgerät gekoppelten Kommunikationsendgerät, wobei die Standortanzeigenachricht die Kontoidentifikation führt.

6. Vorrichtung nach Anspruch 5, wobei
die Standortinformation eine Positionierungsinformation des genannten anderen Geräts ist, die erfasst wird, wenn das genannte andere Gerät ein Funksignal des portablen Zielgeräts erkennt; und
das Sendemodul (630) konfiguriert ist zum:
Senden einer Standortanzeigenachricht in Bezug auf das portable Zielgerät zu einem mit dem portablen Zielgerät gekoppelten Kommunikationsendgerät, wobei die Standortanzeigenachricht die Positionierungsinformation führt.

7. Vorrichtung nach Anspruch 5 oder 6, wobei das Erfassungsmodul (620) konfiguriert ist zum:
Erfassen von Standortinformationen des portablen Zielgeräts und von Zeitinformationen, gesendet von dem genannten anderen Gerät, wenn das genannte andere Gerät ein Funksignal des portablen Zielgeräts erkennt; und
das Sendemodul (630) konfiguriert ist zum:
Senden, gemäß der Standortinformation und der Zeitinformation, einer Standortanzeigenachricht in Bezug auf das portable Zielgerät zu einem mit dem portablen Zielgerät gekoppelten Kommunikationsendgerät.

8. Vorrichtung nach Anspruch 7, wobei die Vorrichtung ferner Folgendes umfasst:
ein zweites Empfangsmodul (640), konfiguriert zum Empfangen der Standortinformation des portablen Zielgeräts und der Zeitinformation, die von dem genannten anderen Gerät gesendet wird, wenn das genannte andere Gerät ein Funksignal des portablen Zielgeräts erkannt hat; und
wobei das Erfassungsmodul (620) konfiguriert ist zum:
Erfassen, gemäß der Geräteidentifikation des portablen Zielgeräts, einer Standortinformation, die einer Zeitinformation entspricht, die der aktuellen Zeit am nächsten liegt, von den empfangenen Standortinformationen des portablen Zielgeräts, und Erfassen der Zeitinformation entsprechend der Standortinformation; oder
Erfassen, gemäß der Geräteidentifikation des portablen Zielgeräts, einer Standortinformation, die einer Zeitinformation entspricht, die um eine Zeitdifferenz innerhalb einer voreingestellten Schwelle früher ist als die aktuelle Zeit, von den empfangenen Standortinformationen des portablen Zielgeräts, und Erfassen der Zeitinformation entsprechend der Standortinformation.

9. Computerprogramm, das bei Ausführung auf einem Prozessor (1922) einer Vorrichtung (1900) das Verfahren nach einem der Ansprüche 1-4 durchführt.

## Revendications

1. Procédé de détermination d'un emplacement d'un dispositif portable cible comprenant :
la réception (101) d'une demande de recherche d'emplacement correspondant à un dispositif portable cible, la demande de recherche d'emplacement comportant une identification de dispositif du dispositif portable cible ;
l'acquisition (102), conformément à l'identification de dispositif du dispositif portable cible, d'informations d'emplacement du dispositif portable cible envoyées par un autre dispositif à la détection par ledit autre dispositif d'un signal sans fil du dispositif portable cible ; et
l'envoi (103), conformément aux informations d'emplacement, d'un message d'indication d'emplacement concernant le dispositif portable cible à un terminal de communication rattaché au dispositif portable cible, **caractérisé en ce que** :
les informations d'emplacement sont une identification de dispositif dudit autre dispositif ; et
l'envoi (103), conformément aux informations d'emplacement, d'un message d'indication d'emplacement concernant le dispositif portable cible à un terminal de communication rattaché au dispositif portable cible comprend :
l'acquisition d'une identification de compte correspondant à l'identification de dispositif dudit autre dispositif, et l'envoi d'une demande d'assistance à un terminal de communication qui est présentement connecté à un compte correspondant à l'identification de compte ; et
si un message de confirmation envoyé par le terminal de communication rattaché au compte correspondant à l'identification de compte est reçu, l'envoi d'un message d'indication d'emplacement concernant le dispositif portable cible au terminal de communication rattaché au dispositif portable cible, le message d'indication d'emplacement comportant l'identification de compte.

2. Procédé selon la revendication 1, dans lequel
les informations d'emplacement sont des informations de positionnement dudit autre dispositif acquises quand ledit autre dispositif détecte un signal sans fil du dispositif portable cible ; et
l'envoi (103), conformément aux informations d'emplacement, d'un message d'indication d'emplacement concernant le dispositif portable cible à un terminal de communication rattaché au dispositif portable cible comprend :
l'envoi d'un message d'indication d'emplacement concernant le dispositif portable cible à un terminal de communication rattaché au dispositif portable cible, le message d'indication d'emplacement comportant les informations de positionnement.

3. Procédé selon la revendication 1 ou 2, dans lequel l'acquisition (102) d'informations d'emplacement du dispositif portable cible envoyées par un autre dispositif quand ledit autre dispositif détecte un signal sans fil du dispositif portable cible, comprend :
l'acquisition d'informations d'emplacement du dispositif portable cible et d'informations temporelles envoyées par ledit autre dispositif à la détection par ledit autre dispositif d'un signal sans fil du dispositif portable cible ; et
l'envoi (103), conformément aux informations d'emplacement, d'un message d'indication d'emplacement concernant le dispositif portable cible à un terminal de communication rattaché au dispositif portable cible, comprend :
l'envoi, conformément aux informations d'emplacement et aux informations temporelles, d'un message d'indication d'emplacement concernant le dispositif portable cible à un terminal de communication rattaché au dispositif portable cible.

4. Procédé selon la revendication 3, le procédé comprenant en outre :
la réception des informations d'emplacement du dispositif portable cible et des informations temporelles envoyées par ledit autre dispositif quand ledit autre dispositif a détecté un signal sans fil du dispositif portable cible ; et
l'acquisition, conformément à l'identification de dispositif du dispositif portable cible, d'informations d'emplacement du dispositif portable cible et d'informations temporelles envoyées par ledit autre dispositif quand ledit autre dispositif a détecté un signal sans fil du dispositif portable cible, comprend :
conformément à l'identification de dispositif du dispositif portable cible, l'acquisition d'une information d'emplacement qui correspond à une information temporelle la plus proche du temps actuel à partir des informations d'emplacement reçues du dispositif portable cible, et l'acquisition de l'information temporelle correspondant à l'information d'emplacement ; ou
conformément à l'identification de dispositif du dispositif portable cible, l'acquisition d'une information d'emplacement qui correspond à une information temporelle antérieure au temps actuel par une différence de temps dans les limites d'un seuil prédéfini, parmi les informations d'emplacement reçues du dispositif portable cible, et l'acquisition de l'information temporelle correspondant à l'information d'emplacement.

5. Appareil de détermination d'un emplacement d'un dispositif portable cible comprenant :
un premier module de réception (610) configuré pour recevoir une demande de recherche d'emplacement correspondant à un dispositif portable cible, la demande de recherche d'emplacement comportant une identification de dispositif du dispositif portable cible ;
un module d'acquisition (620) configuré pour acquérir, conformément à l'identification de dispositif du dispositif portable cible, des informations d'emplacement du dispositif portable cible envoyées par un autre dispositif à la détection par ledit autre dispositif d'un signal sans fil du dispositif portable cible ; et
un module d'envoi (630) configuré pour envoyer, conformément aux informations d'emplacement, un message d'indication d'emplacement concernant le dispositif portable cible à un terminal de communication rattaché au dispositif portable cible, **caractérisé en ce que** :
les informations d'emplacement sont une identification de dispositif dudit autre dispositif ; et
le module d'envoi (630) comprend :
un premier sous-module d'envoi (631) configuré pour acquérir une identification de compte correspondant à l'identification de dispositif dudit autre dispositif, et envoyer une demande d'assistance à un terminal de communication qui est présentement connecté à un compte correspondant à l'identification de compte ; et
un second sous-module d'envoi (632) configuré pour, si un message de confirmation envoyé par le terminal de communication rattaché au compte correspondant à l'identification de compte est reçu, envoyer un message d'indication d'emplacement concernant le dispositif portable cible au terminal de communication rattaché au dispositif portable cible, le message d'indication d'emplacement comportant l'identification de compte.

6. Appareil selon la revendication 5, dans lequel
les informations d'emplacement sons des informations de positionnement dudit autre dispositif acquises à la détection par ledit autre dispositif d'un signal sans fil du dispositif portable cible ; et
le module d'envoi (630) est configuré pour :
envoyer un message d'indication d'emplacement concernant le dispositif portable cible à un terminal de communication rattaché au dispositif portable cible, le message d'indication d'emplacement comportant les informations de positionnement.

7. Appareil selon l'une quelconque des revendications 5 or 6, dans lequel le module d'acquisition (620) est configuré pour :
acquérir des informations d'emplacement du dispositif portable cible et des informations temporelles envoyées par ledit autre dispositif à la détection par ledit autre dispositif d'un signal sans fil du dispositif portable cible ; et
le module d'envoi (630) est configuré pour :
envoyer, conformément aux informations d'emplacement et aux informations temporelles, un message d'indication d'emplacement concernant le dispositif portable cible à un terminal de communication rattaché au dispositif portable cible.

8. Appareil selon la revendication 7, l'appareil comprenant en outre :
un second module de réception (640) configuré pour recevoir les informations d'emplacement du dispositif portable cible et les informations temporelles envoyées par ledit autre dispositif quand ledit autre dispositif a détecté un signal sans fil du dispositif portable cible ; et
le module d'acquisition (620) est configuré pour :
conformément à l'identification de dispositif du dispositif portable cible, acquérir une information d'emplacement qui correspond à une information temporelle la plus proche du temps actuel à partir des informations d'emplacement reçues du dispositif portable cible, et acquérir l'information temporelle correspondant à l'information d'emplacement ; ou
conformément à l'identification de dispositif du dispositif portable cible, acquérir une information d'emplacement qui correspond à une information temporelle antérieure au temps actuel par une différence de temps dans les limites d'un seuil prédéfini, parmi les informations d'emplacement reçues du dispositif portable cible, et acquérir l'information temporelle correspondant à l'information d'emplacement.

9. Programme informatique qui, à son exécution sur un processeur (1922) d'un appareil (1900), met en oeuvre le procédé selon l'une quelconque des revendications 1 à 4.
